# EUROPEAN PATENT SPECIFICATION

(11) **EP 4 360 957 B1**
(45) Date of publication and mention of the grant of the patent: **12.03.2025**
(21) Application number: 23190925.0
(22) Date of filing: 10.08.2023
(51) Int. Cl.: B60R 11/02, B60R 13/02, B60R 11/00

(54) **GARNISH FOR INSTRUMENT PANEL**
VERKLEIDUNG FÜR ARMATURENBRETT
GARNITURE POUR TABLEAU DE BORD

(30) Priority: 25.10.2022 JP 2022170678
(43) Date of publication of application: 01.05.2024
(73) Proprietor: Suzuki Motor Corporation, Hamamatsu-shi, Shizuoka 432-8611 (JP)
(72) Inventor: IWASAKI, Takuya, HAMAMATSU-SHI 432-8611 (JP); IWAMOTO, Kazuhito, HAMAMATSU-SHI 432-8611 (JP)
(74) Representative: Plasseraud IP

(56) References cited:
- EP-B1- 1 801 464
- JP-A- H05 201 274
- JP-B2- 6 852 422
- US-A1- 2009 284 038

## Description

### [Technical Field]

The present invention relates to a garnish for an instrument panel.

### [Background Art]

Various types of equipment such as audio equipment and an air-conditioning operation unit are disposed in an instrument panel of an automobile or the like. These types of in-vehicle equipment are usually removably fixed so that the equipment is able to be maintained or replaced, and mating portions around mounting portions of the equipment are each covered with a garnish separate from an instrument panel body in order to maintain a favorable interior appearance. Accordingly, the garnish is also removably provided on the instrument panel body, and the garnish is configured to be removed before removal of the in-vehicle equipment so that the mounting portion of the in-vehicle equipment is exposed.

For example, Patent Literature 1 describes an instrument panel in which a garnish according to the preamble of claim 1 is attached with a peripheral edge thereof overlapped on a panel body and an edge portion of an attachment member such as another garnish, the instrument panel being characterized in that a rib stands upright on the edge portion of the attachment member and the garnish is attached by hooking the peripheral edge of the garnish on the rib.

### [Citation List]

### [Patent Literature]

[Patent Literature 1] JP H05-201274 A

### [Summary of Invention]

### [Problems to be Solved by the Invention]

A garnish is required to exhibit impact resistance, which makes it necessary to use a resin material that is excellent in impact resistance to mold the garnish. There are various resin materials excellent in impact resistance and a polymer alloy of polycarbonate and acrylonitrile-butadiene-styrene (hereinafter, also referred to as "PC/ABS resin") is thought to have a high impact resistance. However, the present inventors have found that the expected impact resistance fails to be exhibited when a garnish is molded from a PC/ABS resin.

Accordingly, in view of the above-described problem, an object of the present invention is to provide a garnish for an instrument panel, the garnish exhibiting excellent impact resistance even though it is molded from a PC/ABS resin.

### [Means for Solving the Problems]

To achieve the above-described object, the present invention provides a garnish in a form of a frame configured to cover a periphery of in-vehicle equipment disposed around a middle of an instrument panel, the garnish including an opening portion around a middle defined by an upper frame, a lower frame, and right and left frames of the garnish, in which respective outer peripheral portions and inner peripheral portions of the upper frame, the lower frame, and the right and left frames project toward the in-vehicle equipment, the garnish is formed of a polymer alloy of polycarbonate and acrylonitrile-butadiene-styrene (a PC/ABS resin), and a gate mark is provided on at least one of the upper frame, the lower frame, and the right and left frames between the outer peripheral portion and the inner peripheral portion, projecting toward the in-vehicle equipment.

### [Advantageous Effect of Invention]

Thus, according to the present invention, a garnish for an instrument panel can exhibit excellent impact resistance even though it is molded from a PC/ABS resin.

### [Brief Description of Drawings]

[Figure 1] Figure 1 is a front view schematically illustrating an example of an instrument panel attached with a garnish according to the present invention.
[Figure 2] Figure 2 is a front-side perspective view illustrating the garnish attached to the instrument panel illustrated in Figure 1.
[Figure 3] Figure 3 is a rear-side perspective view for explaining a method of attaching the garnish illustrated in Figure 2 to the instrument panel.
[Figure 4] Figure 4 is a rear-side perspective view of the garnish illustrated in Figure 2.
[Figure 5] Figure 5 is an enlarged perspective view of a vicinity of a gate mark located on an upper frame of the garnish illustrated in Figure 4.
[Figure 6] Figure 6 is an enlarged perspective view of a vicinity of a gate mark located on a lower frame of the garnish illustrated in Figure 4.
[Figure 7] Figure 7 is a rear view of the garnish illustrated in Figure 2.
[Figure 8] Figure 8 is a cross-sectional view of the upper frame taken along a line VIII-VIII illustrated in Figure 5.
[Figure 9] Figure 9 is a cross-sectional view for explaining formation of the gate mark illustrated in Figure 8.
[Figure 10] Figure 10 is a cross-sectional view of the lower frame taken along a line X-X illustrated in Figure 6.
[Figure 11] Figure 11 is a plan view illustrating a spot of collecting a specimen in a TD direction in Test Example 1.
[Figure 12] Figure 12 is a plan view illustrating a spot of collecting a specimen in an MD direction in Test Example 1.
[Figure 13] Figure 13 is a plan view illustrating an observation result of a fracture morphology of a specimen caused by a Charpy impact test in Test Example 1.
[Figure 14] Figure 14 is a plan view illustrating a spot at which a specimen molded using a submarine gate in Test Example 3 was collected.
[Figure 15] Figure 15 is a plan view illustrating a spot at which a specimen molded using a side gate in Test Example 3 was collected.
[Figure 16] Figure 16 is a plan view illustrating a result of observation of a fracture morphology of a specimen caused by a Charpy impact test in Test Example 3.

### [Mode for Carrying Out the Invention]

One embodiment of a garnish for an instrument panel according to the present invention is described below with reference to the attached drawings.

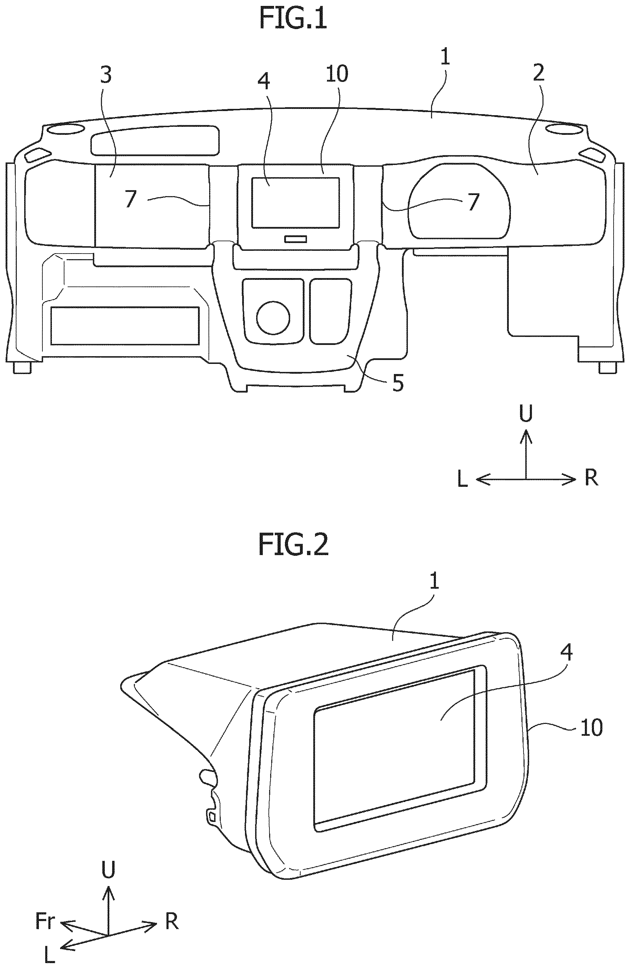

Figure 1 is an example of an instrument panel for a right-hand-drive vehicle, which is provided in a front portion of a vehicle interior. As illustrated in Figure 1, in an instrument panel body 1, a dashboard (not illustrated) including a speedometer, a fuel gauge, and the like is disposed on a right side as viewed by an observer, a decorative panel, that is, cluster panel 2, covering a periphery of the dashboard is provided, and an upper storage box 3 is provided on a left side as viewed by an observer. Around a middle as viewed by an observer, a car navigation system 4 is installed and a decorative panel, that is, garnish 10, covering a periphery of the car navigation system 4, is disposed. A decorative panel, that is, heater control panel 5, for an air-conditioning unit such as an air conditioner or a heater is disposed below the garnish 10. In addition, a center louver mechanism 7 is provided on both sides of the garnish 10, serving as a vent of the air-conditioning unit around a middle in the vehicle interior.

The cluster panel 2, the storage box 3, the garnish 10, and the heater control panel 5 are each molded from a resin, located at a position projecting toward the vehicle interior with respect to the center louver mechanism 7, and provided with a cavity in an internal cross-section to exhibit a buffering action to absorb an impact.

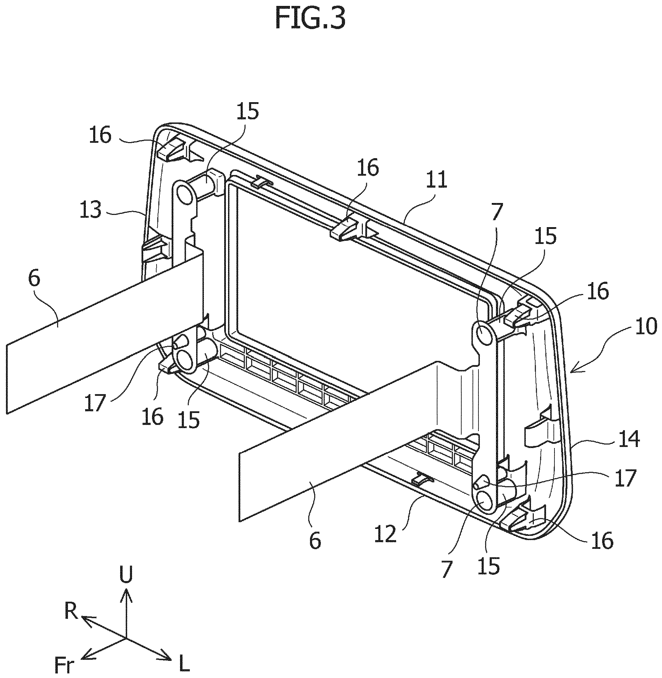

As illustrated in Figure 2, the garnish 10, which is a thinned frame surrounding a display of the car navigation system 4, is configured to cause the instrument panel body 1 to project toward the vehicle interior. As illustrated in Figure 3, the garnish 10 mainly includes, as viewed from a vehicle-interior side, an upper frame 11, a lower frame 12, a right frame 13, and a left frame 14, which define an opening around a middle. A longitudinal direction of the garnish 10 is along a vehicle-width direction. In other words, the upper frame 11 and the lower frame 12 are longer than the left and right frames 13, 14.

For attachment of the garnish 10 to the instrument panel body, a positioning pin 15 projecting from the garnish 10 is inserted into a positioning hole 7 of a bracket 6 of the instrument panel body, and the garnish 10 is fastened by inserting a screw into an attachment hole (not illustrated) of the garnish 10. In addition, a clip 16 of the garnish 10 is inserted into an engagement hole (not illustrated) of the instrument panel body for fixation.

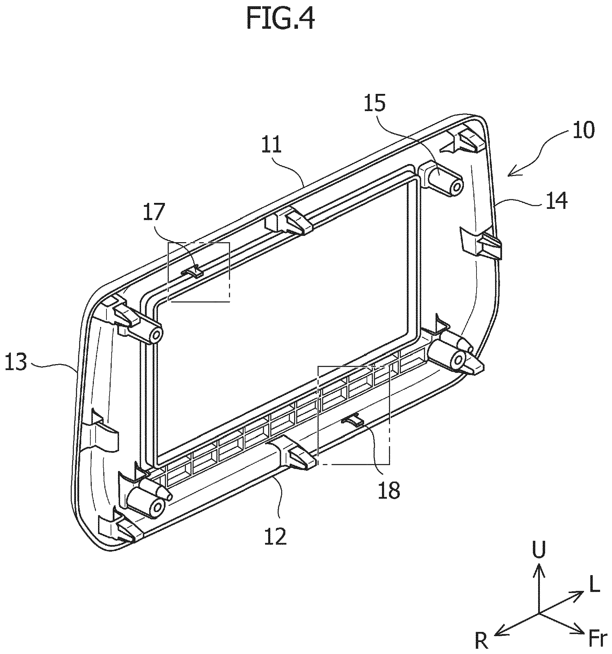

As illustrated in Figure 4, each of the upper frame 11, the lower frame 12, the right frame 13, and the left frame 14 of the garnish 10 has an outer peripheral portion and an inner peripheral portion (i.e., a peripheral portion on an opening side) projecting toward the in-vehicle equipment (i.e., an opposite side to the vehicle interior). The garnish 10 of the present embodiment is formed of a PC/ABS resin, and gate marks 17, 18, which are attributed to injection molding, are provided on the upper frame 11 and the lower frame 12, respectively, projecting toward the in-vehicle equipment.

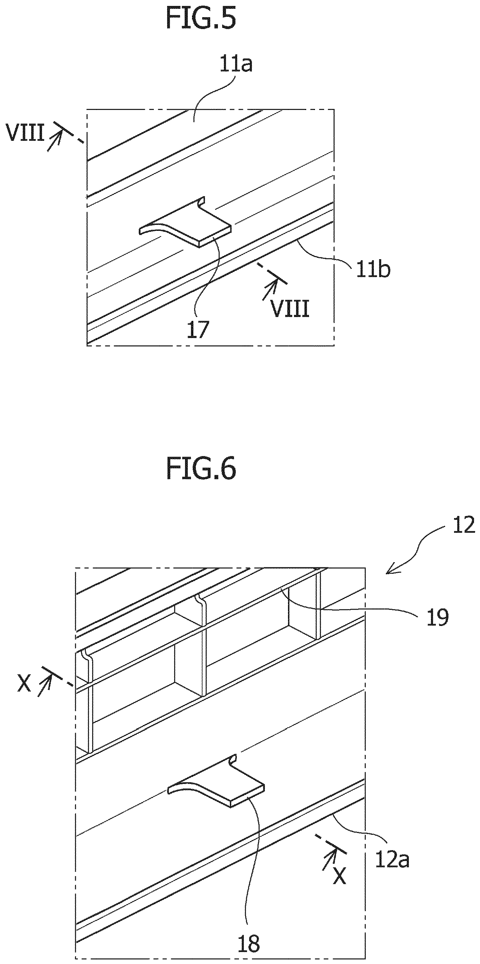

As illustrated in Figure 5, the gate mark 17 of the upper frame 11 is located not on an outer peripheral portion 11a or an inner peripheral portion 11b of the upper frame 11 projecting toward the in-vehicle equipment, but between these portions. Molding the garnish 10 using a submarine gate causes the gate mark 17 to be made at such a position. A distance of the gate mark 17 from the outer peripheral portion 11a and the inner peripheral portion 11b is preferably equal to or greater than 2 mm, more preferably equal to or greater than 4 mm. Thus, injection molding is performed using a PC/ABS resin from a gate opening at the position distant from the outer peripheral portion 11a and the inner peripheral portion 11b, which makes it possible to notably improve the impact resistance of the garnish 10.

It is preferable that the gate mark 17 be offset to the inner peripheral portion 11b with respect to a center between the outer peripheral portion 11a and the inner peripheral portion 11b of the upper frame 11. The gate mark 17 may be a cause of a reduction in impact resistance. However, offsetting the gate mark to the inner peripheral portion 11b on the lower side makes the garnish 10 unlikely to fracture, since if a person in the vehicle hits the garnish 10 due to an accident or the like, it is supposed that the person is likely to hit an upper side of the upper frame 11.

The gate mark 17 of the upper frame 11 has substantially a plate shape with a width direction thereof being along the longitudinal direction of the garnish 10 and the shape is gradually flared toward the upper frame 11. Injection molding is performed using a gate opening providing the gate mark 17 in such a shape, which makes it possible to prevent the occurrence of a crack in the garnish 10.

Likewise, as illustrated in Figure 6, the gate mark 18 of the lower frame 12 is located not on an outer peripheral portion 12a or an inner peripheral portion 12b of the lower frame 12 projecting toward the in-vehicle equipment, but between these portions by virtue of molding using the submarine gate. A distance of the gate mark 18 from the outer peripheral portion 12a and the inner peripheral portion 12b is preferably equal to or greater than 2 mm, more preferably equal to or greater than 4 mm. Thus, injection molding is performed using a PC/ABS resin from a gate opening at a position distant from the outer peripheral portion 12a and the inner peripheral portion 12b, which makes it possible to notably improve the impact resistance of the garnish 10.

It is preferable that the gate mark 18 be offset to the outer peripheral portion 12a with respect to a center between the outer peripheral portion 12a and the inner peripheral portion 12b of the lower frame 12. As described above, the gate mark 18 may be a cause of a reduction in impact resistance. However, providing the gate mark on the outer peripheral portion 12a on the lower side makes the garnish 10 unlikely to fracture, since if a person in the vehicle hits the garnish 10 due to an accident or the like, it is supposed that the person is likely to hit an upper side of the lower frame 11.

Likewise, the gate mark 18 of the lower frame 12 also has substantially a plate shape with a width direction thereof being along the longitudinal direction of the garnish 10 and the shape is gradually flared toward the lower frame 12.

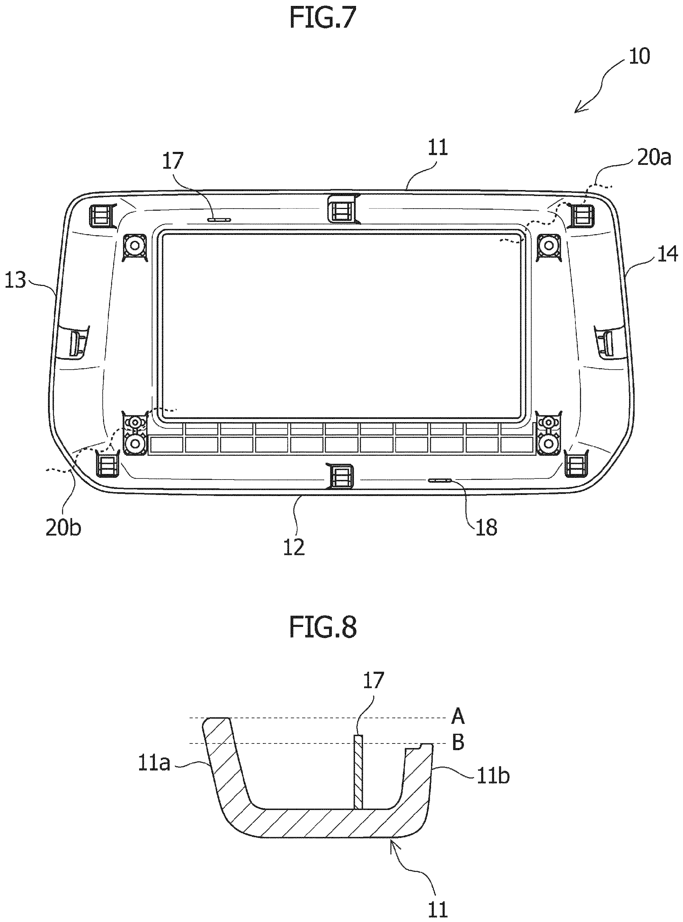

Thus, the two gate marks 17, 18 exist in the garnish 10. This is because the single garnish 10 is molded from the two gate openings by injection molding. Such injection molding using the two gate openings located at the gate marks 17, 18 causes weld lines 20a, 20b where molten resins meet to be formed at corners of the garnish 10 as illustrated in Figure 7. Such formation of the weld lines 20a, 20b at the corners of the garnish 10 increases an angle at which the resins meet, thereby making it possible to improve an appearance of a portion corresponding to the weld lines 20a, 20b.

As illustrated in Figure 8, a height of the gate mark 17 of the upper frame 11 is higher than a height B of the inner peripheral portion 11b of the upper frame. By virtue of the height being higher than that of the inner peripheral portion 11b as described above, it is possible to automatically perform gate cutting at a timing when demolding of the injection molding is performed or, in a case in which nippers or the like are used to perform gate cutting, it is possible to secure a workspace for them. In addition, the height of the gate mark 17 of the upper frame 11 is lower than a height A of the outer peripheral portion 11a of the upper frame. By virtue of the height being lower than that of the outer peripheral portion 11a as described above, it is possible to secure a designed space on an in-vehicle-equipment side.

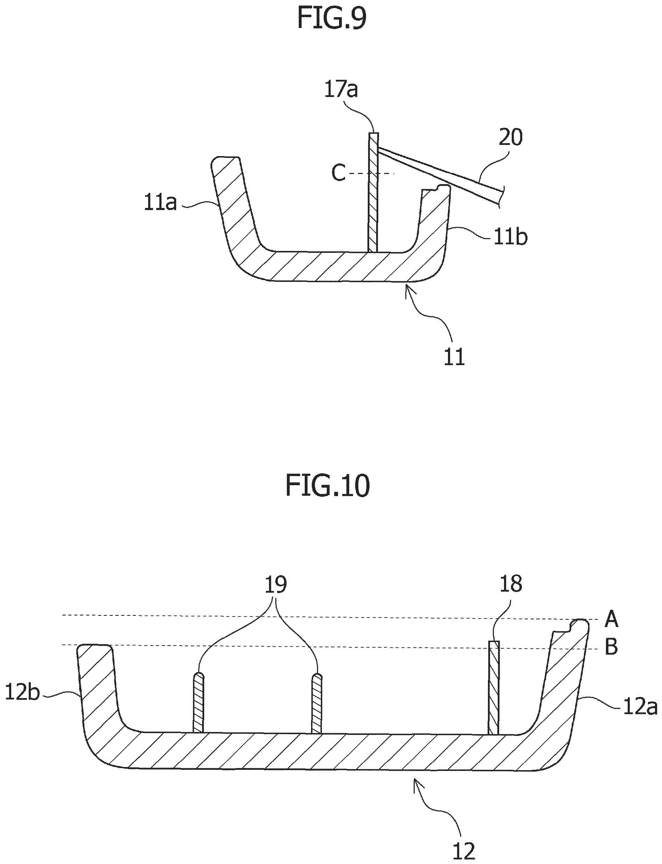

The formation of the gate mark 17 is described with reference to Figure 9. The garnish 10 is injection-molded using a submarine gate 20. This makes it possible to place the gate opening of a mold (not illustrated) not in the projecting outer peripheral portion 11a and inner peripheral portion 11b of the upper frame 11, but at a portion therebetween. Thus, the gate mark 17a, which is higher than the outer peripheral portion 11a of the upper frame as illustrated in Figure 9 immediately after demolding, is able to be cut at a position C lower than the outer peripheral portion 11a of the upper frame with nippers or the like. Note that the gate mark may be automatically cut during demolding as described above. Note that the gate mark 18 of the lower frame 12 may be likewise formed and cut.

As illustrated in Figure 10, a height of the gate mark 18 of the lower frame 12 is higher than the height B of the inner peripheral portion 12b of the lower frame. By virtue of the height being higher than that of the inner peripheral portion 12b as described above, it is possible to automatically perform gate cutting at a timing when demolding of the injection molding is performed or, in a case in which nippers or the like are used to perform gate cutting, it is possible to secure a workspace for them. In addition, the height of the gate mark 18 of the lower frame 12 is lower than a height A of the outer peripheral portion 12a of the lower frame. By virtue of the height being lower than that of the outer peripheral portion 12a as described above, it is possible to secure a designed space on the in-vehicle-equipment side.

### [Examples]

### [Test Example 1]

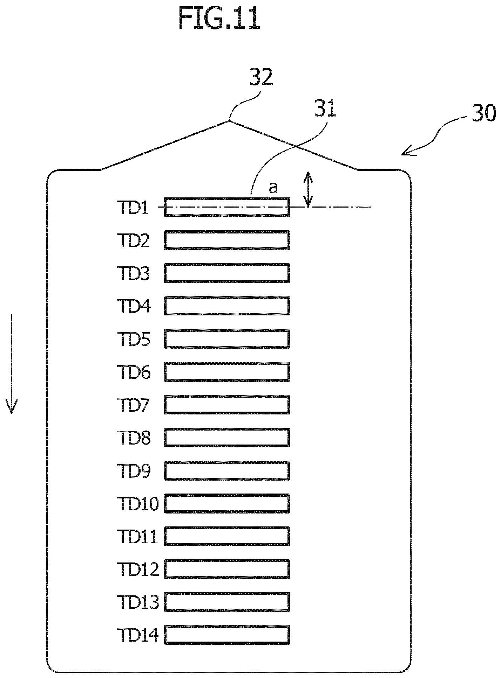

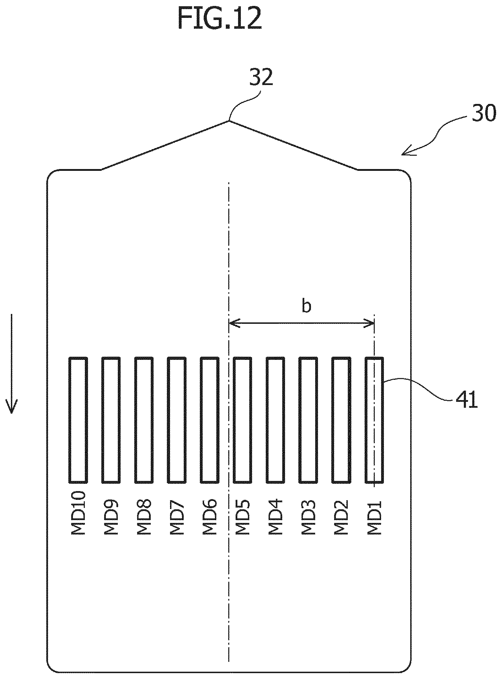

A plate molded article (180 mm x 250 mm x thickness 3 mm, a fine gate plate) of a PC/ABS resin (manufactured by Mitsubishi Engineering-Plastics Corporation, MB2215R) was produced by injection molding and strip specimens (10 mm x 70 mm x thickness 3 mm) in a resin flowing direction (an MD direction) and a vertical direction (a TD direction) were cut out of the plate molded article using an automatic sample molding machine. Figure 11 illustrates a spot at which the specimen in the TD direction was collected and Figure 12 illustrates a spot at which the specimen in the MD direction was collected.

As illustrated in Figure 11, a plate molded article 30 is an article molded from a resin flowing in an arrow direction from a gate opening 32 of an injection molding machine. A strip specimen 31 in the TD direction is a specimen cut such that a longitudinal direction of the strip specimen was vertical to the flow direction. A distance a from an end surface of the plate molded article 30 on a side toward the gate opening 32 to a centerline of a first specimen (TD1) in the TD direction was 20 mm. In contrast, a strip specimen 41 in the MD direction is a specimen cut out of the plate molded article 30 such that a longitudinal direction of the strip specimen 41 was the same as the flowing direction indicated by an arrow as illustrated in Figure 12. A distance b from a centerline of the plate molded article 30 to a centerline of a first specimen (MD1) in the MD direction was 67.5 mm.

The specimens in the TD direction and the MD direction were each notched (R = 0.25) such that a remaining width was 8 mm. Then, a Charpy impact test was performed, and a Charpy impact value of each specimen was measured. Note that the Charpy impact test was performed using a Charpy impact tester (manufactured by Toyo Seiki Seisaku-sho, Ltd., model: IMPACT TESTER IT) in conformity with JIS K 7111. The test temperature was 23 °C and the hammer was 4J.

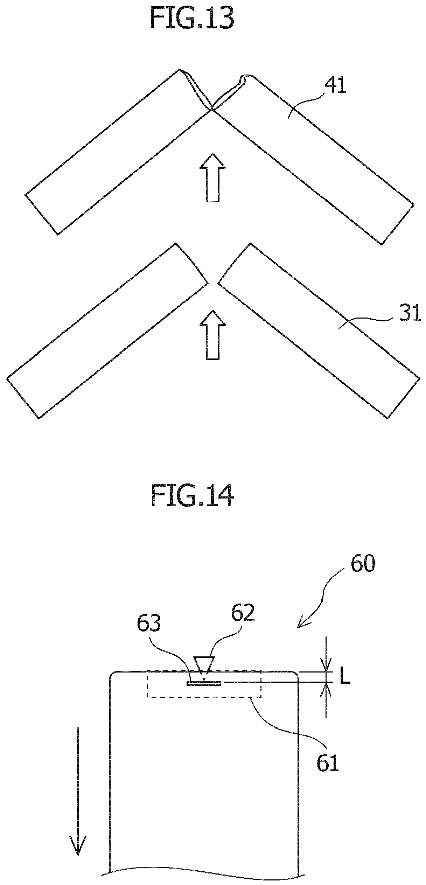

As a result, all the specimens 41 in the MD direction suffered partial fracture (P fracture) as illustrated in Figure 13. Note that an arrow in the figure is a direction of hitting with a hammer during the Charpy impact test, which is an opposite direction to the resin flowing direction. In addition, Charpy impact values of the specimens (MD1 to MD10) in the MD direction were stably high values. No dependency on the specimen collection spot was observed. In contrast, it was observed that the specimens in the TD direction had a dependency on the specimen collection spot. The specimens (TD12 to TD14) in a portion in the vicinity of a flow end distant from the gate opening of injection molding suffered P fracture or hinge fracture (H fracture), whereas the specimen 31 (TD1 to TD11) in the TD direction close to a portion near the gate opening suffered complete fracture (C fracture) as illustrated in Figure 13. Similarly, for the Charpy impact value, while being low near the gate opening and around a middle portion, the impact value increased with a reduction in distance to the flow end. With an assumption of an average of the Charpy impact values of the specimens in the MD direction being 100, even the highest value (TD14) among those of the specimens was merely 66, and an average thereof was 34, which was considerably low.

As described above, a specimen fracture morphology was different between the MD direction and the TD direction and the Charpy impact values of the specimens in the TD direction were equal to or less than a half of those of the specimens in the MD direction. Accordingly, molding a component with a high impact resistance from a PC/ABS resin requires measures for maintaining a high impact resistance value even in the TD direction.

### [Test Example 2]

A Charpy impact value of each specimen in the MD direction and the TD direction was measured as in Test Example 1, except that a PC resin (manufactured by Mitsubishi Engineering-Plastics Corporation, S-3000R) was used in place of the PC/ABS resin.

As a result, it was not observed that the PC resin had anisotropy depending on the resin flowing direction, as the PC/ABS resin in Test Example 1. As for the Charpy impact value of the PC resin, assuming that an average of the Charpy impact values of the specimens in the MD direction in Test Example 1 was 100, an average of the specimens in the MD direction was 142 and an average of the specimens in the TD direction was 144. All the specimens of the PC resin suffered P fracture. From this result, the anisotropy of the PC/ABS resin is thought to originate from an ABS resin and is speculated to be attributed to, in particular, an orientation of rubber in the ABS resin.

### [Test Example 3]

With use of a submarine gate, a strip specimen in the TD direction with a gate opening placed in the specimen was produced and a Charpy impact test was performed. First, a plate molded article was molded using a submarine gate 62 (gate opening: 6 mm x 2.5 mm) such that a gate opening 63 of the submarine gate 62 was placed inside with respect to an end surface of the plate molded article 60 as illustrated in Figure 14. Note that CK43-D4 manufactured by Techno-UMG Co., Ltd., was used as the PC/ABS resin. JSW180ton manufactured by The Japan Steel Works, Ltd., was used as the molding machine and a one-gate plate-shaped mold was used as the mold. A distance L between the gate opening 63 and the end surface of the plate molded article 60 (hereinafter, referred to as "gate distance") was changed by changing a shape of a PL surface (a mating surface of the mold) of a portion that is a loose piece (not illustrated). The specimen 61 was in the form of a strip specimen in the TD direction (80 mm x 10 mm x thickness 3 mm) as illustrated in Figure 14 and was cut out along the end surface of the plate molded article 60.

Five of each of three types of specimens with gate distances L of 0 mm, 2 mm, and 4.4 mm were produced, and a Charpy impact test was performed using the Charpy impact tester in conformity with JIS K 7111 as in Test Examples 1 and 2. Note that no notch was made, and the hammer was 7.5 J in Test Example 3.

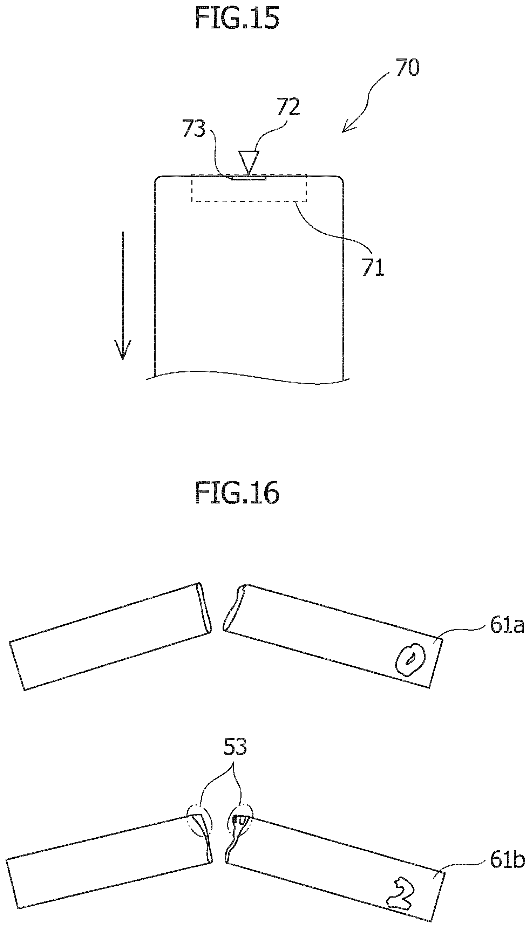

In addition, for comparison, five strip specimens in the TD direction with gate openings 73 placed on end portions of specimens 71 were produced using a side gate 72 as illustrated in Figure 15 and a Charpy impact test was performed under conditions similar to those described above. Table 1 shows a result for each specimen. Note that the Charpy impact values in Table 1, which are averages of measurement results of the five specimens of each type, are not measurement values (unit: KJ/m²), but are relative values, with an assumption that the average of the Charpy impact values of the specimens in the MD direction in Test Example 1 is 100. In addition, as for the specimens with the gate distances L of 0 mm and 2 mm molded using the submarine gate, Figure 16 illustrates observation results of fracture morphologies caused by the Charpy impact test.

**[Table 1]**

| Table 1: Result of Charpy Impact Test of Test Example 3 | | | | |
|---|---|---|---|---|
| Gate Shape | Side | Submarine | | |
| Gate Distance L [mm] | 0 | 0 | 2 | 4.4 |
| Charpy Impact Value [Relative Value] | 20 | 28 | 72 | 190 |
| Fracture Morphology | C | C | C | C |
| Plastic Deformation | No | No | Yes | Yes |

As illustrated in Figure 16, specimens 50 with the gate distance L of 0 mm and specimens 52 with the gate distance L of 2 mm, which were molded using the submarine gate, all suffered complete fracture (C fracture). However, as for the specimens 50 with the gate distance L of 0 mm, almost no plastically deformed region was observed in a crack occurrence portion, and additionally, the impact resistance was low. In contrast, as for the specimens 52 with the gate distance L of 2 mm, a plastic deformation 53 was observed in a crack occurrence portion, and additionally, the impact resistance was more than twice as high as that of the specimens with the gate distance L of 0 mm as shown in Table 1.

Although not illustrated in Figure 16, a plastic deformation was observed also in crack occurrence portions of the specimens with the gate distance L of 4.4 mm and the impact resistance was notably high as shown in Table 1. In contrast, as for the specimens molded using the side gate (of course, the gate distance L was 0 mm), although not illustrated in Figure 16, almost no plastically deformed region was observed in the crack occurrence portions, and additionally, the impact resistance was low as shown in Table 1.

From these results, it is presumed that a specimen molded using the submarine gate should be improved in impact resistance against a width-direction tensile deformation by virtue of the occurrence of a width-direction flow from the gate opening to the end of the specimen. An increase in gate distance is speculated to result in an increase in a region having a strong resistance against a width-direction deformation.

### [Reference Signs List]

1 Instrument panel
10 Garnish
11 Upper frame
12 Lower frame
17, 18 Gate mark
20a, 20b Weld line
30 Plate molded article
31, 41, 61, 71 Specimen

## Claims

1. A garnish (10) for an instrument panel (1), the garnish (10) being in a form of a frame configured to cover a periphery of in-vehicle equipment disposed around a middle of an instrument panel, the garnish (10) comprising:
an opening portion around a middle defined by an upper frame (11), a lower frame (12), and right and left frames (13, 14) of the garnish (10),
respective outer peripheral portions and inner peripheral portions of the upper frame (11), the lower frame (12), and the right and left frames (13, 14) projected toward the in-vehicle equipment (Fr), **characterized in that**
the garnish (10) is formed of a polymer alloy of polycarbonate and acrylonitrile-butadiene-styrene (a PC/ABS resin), and
a gate mark (17, 18) is provided on at least one of the upper frame (11), the lower frame (12), and the right and left frames (13, 14) between the outer peripheral portion and the inner peripheral portion, projecting toward the in-vehicle equipment (Fr).

2. The garnish (10) for an instrument panel (1) as claimed in claim 1, wherein the gate mark (17, 18) has a shape gradually flared with respect to the frame.

3. The garnish (10) for an instrument panel (1) as claimed in claim 1, wherein the gate mark (17, 18) has a height higher than the inner peripheral portion and lower than the outer peripheral portion of the frame.

4. The garnish (10) for an instrument panel (1) as claimed in claim 1, wherein the gate mark (17) is provided on the upper frame (11) and is offset to the inner peripheral portion (11b) with respect to a center between the outer peripheral portion (11a) and the inner peripheral portion (11b) of the upper frame (11).

5. The garnish (10) for an instrument panel (1) as claimed in claim 1, wherein the gate mark (18) is provided on the lower frame (12) and is offset to the outer peripheral portion (12a) with respect to a center between the outer peripheral portion (12a) and the inner peripheral portion (12b) of the lower frame (12).

6. The garnish (10) for an instrument panel (1) as claimed in claim 1, wherein a weld line (20a, 20b) is located at a corner.

## Patentansprüche

1. Leiste (10) für eine Instrumententafel (1), wobei die Leiste (10) in einer Form eines Rahmens ausgebildet ist, welcher dazu eingerichtet ist, einen Umfang einer In-Fahrzeugausrüstung zu bedecken, welche um eine Mitte einer Instrumententafel angeordnet ist, wobei die Leiste (10) umfasst:
einen offenen Abschnitt um eine Mitte, welcher durch einen oberen Rahmen (11), einen unteren Rahmen (12), und einen rechten und einen linken Rahmen (13, 14) der Leiste (10) definiert ist,
jeweilige äußere Umfangsabschnitte und innere Umfangsabschnitte des oberen Rahmens (11), des unteren Rahmens (12) und des rechten und des linken Rahmens (13, 14), welche zu der In-Fahrzeugausrüstung (Fr) hervorstehen, **dadurch gekennzeichnet, dass**
die Leiste (10) aus einer Mehrkomponentenlegierung von Polykarbonat und Acrylnitril-Butadien-Styrol (einem PC/ABS Harz) gebildet ist, und
eine Anspritzstelle (17, 18) an wenigstens einem von dem oberen Rahmen (11), dem unteren Rahmen (12), und dem rechten und dem linken Rahmen (13, 14) zwischen dem äußeren Umfangsabschnitt und dem inneren Umfangsabschnitt bereitgestellt ist, welche zu der In-Fahrzeugausrüstung (Fr) hervorsteht.

2. Leiste (10) für eine Instrumententafel (1) nach Anspruch 1, wobei die Anspritzstelle (17, 18) eine Form aufweist, welche sich schrittweise aufweitet mit Bezug auf den Rahmen.

3. Leiste (10) für eine Instrumententafel (1) nach Anspruch 1, wobei die Anspritzstelle (17, 18) eine Höhe aufweist, welche höher als der innere Umfangsabschnitt ist und niedriger als der äußere Umfangsabschnitt des Rahmens ist.

4. Leiste (10) für eine Instrumententafel (1) nach Anspruch 1, wobei die Anspritzstelle (17) an dem oberen Rahmen (11) bereitgestellt ist und zu dem inneren Umfangsabschnitt (11b) mit Bezug zu einem Zentrum zwischen dem äußeren Umfangsabschnitt (11a) und dem inneren Umfangsabschnitt (11b) des oberen Rahmens (11) versetzt ist.

5. Leiste (10) für eine Instrumententafel (1) nach Anspruch 1, wobei die Anspritzstelle (18) an dem unteren Rahmen (12) bereitgestellt ist und zu dem äußeren Umfangsabschnitt (12a) mit Bezug zu einem Zentrum zwischen dem äußeren Umfangsabschnitt (12a) und dem inneren Umfangsabschnitt (12b) des unteren Rahmens (12) versetzt ist.

6. Leiste (10) für eine Instrumententafel (1) nach Anspruch 1, wobei eine Schweißnaht (20a, 20b) an einer Ecke angeordnet ist.

## Revendications

1. Garniture (10) pour un tableau de bord (1), la garniture (10) étant sous la forme d'un cadre configuré pour couvrir une périphérie d'un équipement embarqué disposé autour d'un milieu d'un tableau de bord, la garniture (10) comprenant :
une partie d'ouverture autour du milieu définie par un cadre supérieur (11), un cadre inférieur (12), et des cadres droit et gauche (13, 14) de la garniture (10),
des parties périphériques externes et des parties périphériques internes respectives du cadre supérieur (11), du cadre inférieur (12), et des cadres droit et gauche (13, 14) faisant saillie en direction de l'équipement embarqué (Fr), **caractérisée en ce que**
la garniture (10) est formée d'un alliage polymère de polycarbonate et d'acrylonitrile butadiène styrène (une résine PC/ABS), et
un repère de grille (17, 18) est disposé sur au moins un parmi le cadre supérieur (11), le cadre inférieur (12), et les cadres droit et gauche (13, 14) entre la partie périphérique externe et la partie périphérique interne, faisant saillie en direction de l'équipement embarqué (Fr).

2. Garniture (10) pour un tableau de bord (1) selon la revendication 1, dans laquelle le repère de grille (17, 18) présente une forme progressivement évasée par rapport au cadre.

3. Garniture (10) pour un tableau de bord (1) selon la revendication 1, dans laquelle le repère de grille (17, 18) présente une hauteur supérieure à la partie périphérique interne et inférieure à la partie périphérique externe du cadre.

4. Garniture (10) pour un tableau de bord (1) selon la revendication 1, dans laquelle le repère de grille (17) est disposé sur le cadre supérieur (11) et est décalé vers la partie périphérique interne (11b) par rapport à un centre entre la partie périphérique externe (11a) et la partie périphérique interne (11b) du cadre supérieur (11).

5. Garniture (10) pour un tableau de bord (1) selon la revendication 1, dans laquelle le repère de grille (18) est disposé sur le cadre inférieur (12) et est décalé vers la partie périphérique externe (12a) par rapport à un centre entre la partie périphérique externe (12a) et la partie périphérique interne (12b) du cadre inférieur (12).

6. Garniture (10) pour un tableau de bord (1) selon la revendication 1, dans laquelle une ligne de soudure (20a, 20b) est située au niveau d'un coin.
